# EUROPEAN PATENT APPLICATION

(11) **EP 4 600 620 A1**
(43) Date of publication of application: **13.08.2025**
(21) Application number: 23871646.8
(22) Date of filing: 29.08.2023
(51) Int. Cl.: G01K 1/14, H01M 50/50

(54) **TEMPERATURE SENSOR FOR BUSBAR, BUSBAR MODULE AND MANUFACTURING METHOD THEREFOR**

(30) Priority: 29.09.2022 JP 2022156028
(71) Applicant: Mitsubishi Materials Corporation, Tokyo 100-8117 (JP); AISIN CORPORATION, Kariya-shi, Aichi 448-8650 (JP)
(72) Inventor: EBISAWA, Satoshi, Chichibu-gun, Saitama 368-8502 (JP); INUI, Shinichirou Chichibu-gun, Chichibu-gun, Saitama 368-8502 (JP)
(74) Representative: Hoffmann Eitle
(86) International application number: PCT/JP2023/031161
(87) International publication number: WO 2024/070405

(57) **Abstract**

There are provided a bus bar temperature sensor capable of measuring a temperature of a bus bar with high accuracy by reliably bringing a heat receiving surface into tight contact, and a bus bar module and a method of manufacturing the same. The bus bar temperature sensor according to the present invention is a temperature sensor 1 used by being attached to a bus bar 2, including: a heat-sensitive element 3; and a case portion 4 in which the heat-sensitive element is housed, wherein the bus bar includes a through hole 2a, the case portion includes a case body 5 and a protrusion portion 6 formed protruding from the case body and insertable into the through hole, and the heat-sensitive element is housed in the protrusion portion.

## Description

### Technical Field

The present invention relates to a bus bar temperature sensor attached to a bus bar used as a wiring member of a motor stator, a battery, or the like, and a bus bar module and a method of manufacturing the same.

### Background Art

There is known a bus bar used as a wiring member of a motor stator, a battery, or the like to which a temperature sensor is attached in order to detect the temperature of the bus bar. For example, since the temperature of the motor stator becomes high, control by a temperature sensor is essential.

Conventionally, for example, in Patent Literature 1, there is described a temperature detection device using a metal bracket for attaching a temperature sensor to a coil.

In addition, in Patent Literature 2, there is described a stator of a rotary electric machine including a neutral wire connected to a stator coil and having a U-shaped portion folded into a U shape, and a temperature sensor in contact with the neutral wire.

### Citation List

### Patent Literature

Patent Literature 1: JP 6674070 B2
Patent Literature 2: JP 2018-61389 A

### Summary of Invention

### Technical Problem

The following issues remain in the conventional technology described above.

That is, in the conventional technology described above, since there is tolerance in an attachment holder such as a bracket or a flat wire (rectangular wire) such as a neutral wire, rattling occurs when a temperature sensor is attached thereto and a heat receiving surface of the temperature sensor is not reliably in tight contact, causing deterioration in accuracy of temperature measurement. In addition, when an insulating varnish or the like is used as a fixing method, dispersion of the insulating varnish entering between the attachment holder or the flat wire (rectangular wire) and the heat receiving surface of the temperature sensor also causes disadvantage of affecting the heat receiving property.

The present invention has been made in view of the issues described above, and an object thereof is to provide a bus bar temperature sensor capable of measuring the temperature of a bus bar with high accuracy by reliably bringing a heat receiving surface into tight contact, and a bus bar module and a method of manufacturing the same.

### Solution to Problem

In order to solve the issues described above, the present invention adopts the following configuration. That is, a bus bar temperature sensor according to a first aspect of the invention is a temperature sensor used by being attached to a bus bar, including: a heat-sensitive element; and a case portion in which the heat-sensitive element is housed, wherein the bus bar includes a through hole, the case portion includes a case body and a protrusion portion formed protruding from the case body and insertable into the through hole, and the heat-sensitive element is housed in the protrusion portion.

Since the bus bar temperature sensor includes the protrusion portion formed protruding from the case body and insertable into the through hole and the heat-sensitive element is housed in the protrusion portion, the protrusion portion inserted into the through hole can receive the heat of the bus bar from the entire circumference, causing the thermal responsiveness to improve, and thus it becomes possible to measure the temperature with high accuracy.

In a bus bar temperature sensor according to a second aspect of the invention, based on the first aspect of the invention, an end surface of the case body on which the protrusion portion is formed comes into contact with or comes close to the bus bar in a state where the protrusion portion is inserted into the through hole.

That is, in the bus bar temperature sensor, since the end surface of the case body on which the protrusion portion is formed comes into contact with or comes close to the bus bar in a state where the protrusion portion is inserted into the through hole, the end surface of the case body serves as a stopper for insertion of the protrusion portion, and heat from the bus bar can also be received by the end surface.

In a bus bar temperature sensor according to a third aspect of the invention, based on the first aspect of the invention, the bus bar temperature sensor includes: a pair of lead wires which have one ends connected to the heat-sensitive element and which are housed in the case body; and a pair of electrode terminals which have one ends connected to other ends of the pair of lead wires and which are housed in the case body, wherein the case body includes a connector portion into which a pair of external wirings is inserted such that other ends of the pair of electrode terminals can be connected to the pair of external wirings.

That is, in the bus bar temperature sensor, since the case body includes the connector portion into which the pair of external wirings is inserted such that the other ends of the pair of electrode terminals can be connected to the pair of external wirings, the external wirings can be easily connected by the connector portion.

A bus bar module according to a fourth aspect of the invention includes: a bus bar; the bus bar temperature sensor according to any one of the first to third aspects of the invention attached to the bus bar; and a resin molded portion which fills in a gap between the through hole and the protrusion portion and seals the through hole and the protrusion portion.

That is, since the bus bar module includes the resin molded portion which fills in the gap between the through hole and the protrusion portion and seals the through hole and the protrusion portion, the through hole and the protrusion portion are in contact with each other directly or via the resin molded portion and the heat receiving surface is in tight contact over the entire circumference, causing a contact area between the bus bar and the protrusion portion to increase and the thermal responsiveness to improve.

In a bus bar module according to a fifth aspect of the invention, based on the fourth aspect of the invention, the bus bar includes a wide portion bulging in a width direction around the through hole, and the resin molded portion seals a portion including the wide portion.

That **is,** in the bus bar module, since the bus bar includes the wide portion bulging in the width direction around the through hole, the strength around the through hole can be reinforced by the wide portion. In addition, since the resin molded portion seals a portion including the wide portion, the heat from the wide portion can be transmitted to the bus bar temperature sensor via the resin molded portion, and the temperature can be measured with higher accuracy.

In a bus bar module according to a sixth aspect of the invention, based on the fourth aspect of the invention, the through hole and the protrusion portion both have a circular cross section.

That is, in the bus bar module, since the through hole and the protrusion portion both have a circular cross section, it becomes easy to uniformly fill the gap between the through hole and the protrusion portion with the resin over the entire circumference, and it becomes easy to uniformly transmit the heat from the entire circumference to the protrusion portion.

In a bus bar module according to a seventh aspect of the invention, based on any one of the fourth to sixth aspects of the invention, the bus bar is used for a motor stator.

That is, in the bus bar module, since the bus bar is used for the motor stator, the temperature of the motor stator can be measured with high accuracy and stability by the protrusion portion of the temperature sensor in which the heat receiving surface is reliably in tight contact.

A method of manufacturing the bus bar module according to an eighth aspect of the invention is a method of manufacturing the bus bar module according to the fourth aspect of the invention, the method including: a protrusion portion inserting step of inserting the protrusion portion of the bus bar temperature sensor according to any one of the first to third aspects of the invention into a through hole formed in a bus bar; and a resin filling step of forming a resin molded portion which fills a gap between the through hole and the protrusion portion with a resin and seals the through hole and the protrusion portion.

### Advantageous Effects of Invention

According to the present invention, the following effects are achieved.

That is, according to the bus bar temperature sensor in the present invention, since the protrusion portion formed protruding from the case body and insertable into the through hole is provided and the heat-sensitive element is housed in the protrusion portion, the protrusion portion inserted into the through hole can receive the heat of the bus bar from the entire circumference, causing the thermal responsiveness to improve, and thus it becomes possible to measure the temperature with high accuracy.

In addition, according to the bus bar module and the method of manufacturing the same in the present invention, since the resin molded portion which fills in the gap between the through hole and the protrusion portion and seals the through hole and the protrusion portion is provided, the through hole and the protrusion portion are in contact with each other directly or via the resin molded portion and the heat receiving surface is in tight contact over the entire circumference, causing a contact area between the bus bar and the protrusion portion to increase and the thermal responsiveness to improve.

As described above, the bus bar temperature sensor, and the bus bar module and the method of manufacturing the same according to the present invention are suitable for highly accurate temperature measurement of a bus bar of a motor stator or the like since the thermal responsiveness is increased.

### Brief Description of Drawings

Fig. 1A is a perspective view illustrating a state before insertion of a protrusion portion in a first embodiment of a bus bar temperature sensor, and a bus bar module and a method of manufacturing the same according to the present invention.
Fig. 1B is a perspective view illustrating a state after insertion of the protrusion portion in the first embodiment of the bus bar temperature sensor, and the bus bar module and the method of manufacturing the same according to the present invention.
Fig. 1C is a perspective view illustrating a state after formation of a resin molded portion in the first embodiment of the bus bar temperature sensor, and the bus bar module and the method of manufacturing the same according to the present invention.
Fig. 2 is a longitudinal sectional view illustrating the bus bar temperature sensor and the bus bar module above a connector portion in the first embodiment.
Fig. 3A is a side view illustrating the bus bar module in the first embodiment.
Fig. 3B is a cross-sectional view from an arrow direction taken along line A-A illustrating the bus bar module in the first embodiment.
Fig. 4A is a side view illustrating a bus bar module in a second embodiment of the bus bar temperature sensor, and the bus bar module and the method of manufacturing the same according to the present invention.
Fig. 4B is a cross-sectional view from an arrow direction taken along line B-B illustrating the bus bar module in the second embodiment of the bus bar temperature sensor, and the bus bar module and the method of manufacturing the same according to the present invention.
Fig. 5 is a perspective view of a bus bar module illustrating the inside thereof in a see-through manner in a third embodiment of the bus bar temperature sensor, and the bus bar module and the method of manufacturing the same according to the present invention.
Fig. 6 is a perspective view illustrating the bus bar module in the third embodiment.

### Description of Embodiments

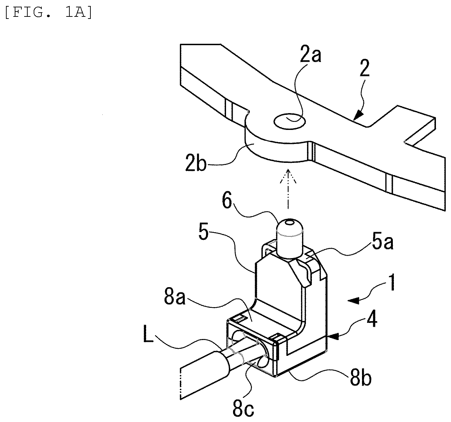

Hereinafter, a first embodiment of a bus bar temperature sensor, and a bus bar module and a method of manufacturing the same according to the present invention will be described with reference to Figs. 1A to 3B. Note that, in some of the drawings used in the following description, the scale is appropriately changed as necessary in order to make each portion recognizable or to easily recognize each portion.

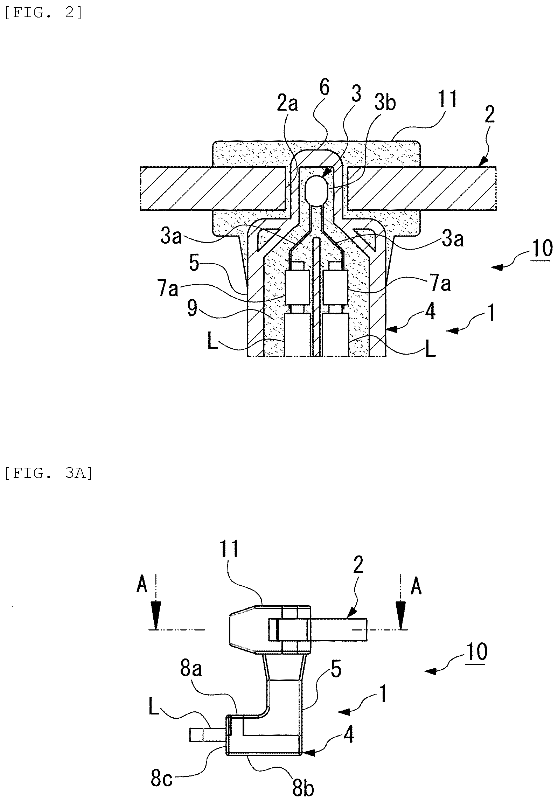

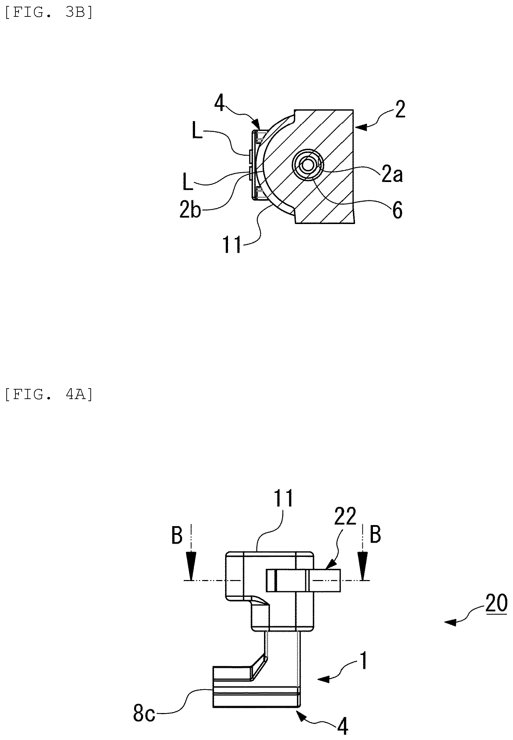

As illustrated in Figs. 1A to 3B, a bus bar temperature sensor 1 in the present embodiment is a temperature sensor used by being attached to a bus bar 2, and includes a heat-sensitive element 3 and a case portion 4 in which the heat-sensitive element 3 is housed.

The bus bar 2 includes a through hole 2a.

The case portion 4 includes a case body 5 and a protrusion portion 6 formed protruding from the case body 5 and insertable into the through hole 2a.

Note that the case portion 4 is formed of resin.

As illustrated in Fig. 2, the heat-sensitive element 3 is housed in the protrusion portion 6.

An end surface 5a of the case body 5 on which the protrusion portion 6 is formed comes into contact with or comes close to the bus bar 2 in a state where the protrusion portion 6 is inserted into the through hole 2a.

In addition, as illustrated in Fig. 2, the bus bar temperature sensor 1 in the present embodiment includes a pair of lead wires 3a which have one ends connected to the heat-sensitive element 3 and which are housed in the case body 5.

The case body 5 includes an insertion port 8c into which a pair of external wirings L is inserted.

The insertion port 8c is formed by fitting an insertion port lower portion 8b, which is separately formed of resin, into an insertion port upper portion 8a formed in a lower portion of the case body 5.

In addition, the insertion port 8c is opened in a direction orthogonal to a protruding direction of the protrusion portion 6.

A bus bar module 10 in the present embodiment includes the bus bar 2, the bus bar temperature sensor 1 attached to the bus bar 2, and a resin molded portion 11 which fills in a gap between the through hole 2a and the protrusion portion 6 and seals the through hole 2a and the protrusion portion 6.

The bus bar 2 has a wide portion 2b bulging in a width direction around the through hole 2a.

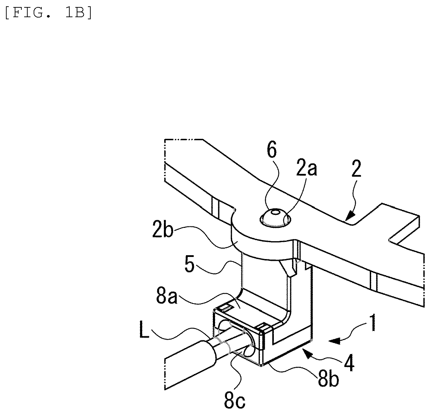

As illustrated in Figs. 1B and 2, the wide portion 2b has a shape bulging in an arc shape in the width direction corresponding to the through hole 2a having a circular cross section.

The resin molded portion 11 seals a portion including the wide portion 2b. That is, the resin molded portion 11 is formed from an upper surface of the bus bar 2 to a lower surface of the bus bar 2 covering the wide portion 2b.

The through hole 2a and the protrusion portion 6 both have a circular cross section.

Note that the bus bar 2 is used for a motor stator. That is, the bus bar temperature sensor 1 in the present embodiment detects the temperature of a coil conductor of the motor stator.

In addition, the bus bar 2 is made of metal such as Cu, for example.

The bus bar module 10 in the present embodiment is attached to a coil portion of a motor by welding or the like.

As illustrated in Fig. 2, the heat-sensitive element 3 includes a sealing glass portion (not illustrated) covering a thermistor (not illustrated) mounted on a substrate (not illustrated) with glass, for example, and a resin coating portion 3b covering the sealing glass portion with resin.

In addition, the pair of lead wires 3a is connected to the heat-sensitive element 3, and the pair of external wirings L is connected to the pair of lead wires 3a via connection terminal portions 7a (crimping terminal).

Note that the inside of the case portion 4 is filled with an insulating resin 9. As the insulating resin 9, an insulating resin such as a silicone resin or an epoxy resin can be employed, and a resin having excellent thermal conductivity is particularly preferable.

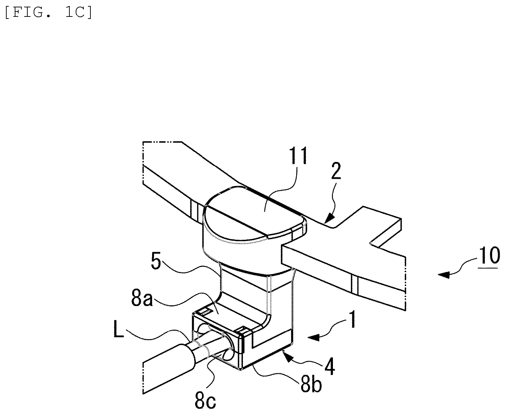

A method of manufacturing a bus bar module in the present embodiment includes a protrusion portion inserting step of inserting the protrusion portion 6 of the bus bar temperature sensor 1 into the through hole 2a formed in the bus bar 2, as illustrated in Figs. 1A and 1B, and a resin filling step of forming the resin molded portion 11 which fills a gap between the through hole 2a and the protrusion portion 6 with a resin and seals the through hole 2a and the protrusion portion 6, as illustrated in Figs. 1C and 2.

In the resin filling step, the resin molded portion 11 which fills the gap between the through hole 2a and the protrusion portion 6 with the resin by insert molding and which seals the wide portion 2b, the through hole 2a, and the protrusion portion 6, is formed.

As described above, since the bus bar temperature sensor 1 in the present embodiment includes the protrusion portion 6 formed protruding from the case body 5 and insertable into the through hole 2a and the heat-sensitive element 3 is housed in the protrusion portion 6, the protrusion portion 6 inserted into the through hole 2a can receive the heat of the bus bar 2 from the entire circumference, causing the thermal responsiveness to improve, and thus it becomes possible to measure the temperature with high accuracy.

In addition, since the end surface 5a of the case body 5 on which the protrusion portion 6 is formed comes into contact with or comes close to the bus bar 2 in a state where the protrusion portion 6 is inserted into the through hole 2a, the end surface 5a of the case body 5 serves as a stopper for insertion of the protrusion portion 6, and heat from the bus bar 2 can also be received by the end surface 5a.

Since the bus bar module 10 in the present embodiment includes the resin molded portion 11 which fills in the gap between the through hole 2a and the protrusion portion 6 and seals the through hole 2a and the protrusion portion 6, the through hole 2a and the protrusion portion 6 are in contact with each other directly or via the resin molded portion 11 and the heat receiving surface is in tight contact over the entire circumference, causing a contact area between the bus bar 2 and the protrusion portion 6 to increase and the thermal responsiveness to improve.

Furthermore, since the bus bar 2 includes the wide portion 2b bulging in the width direction around the through hole 2a, the strength around the through hole 2a can be reinforced by the wide portion 2b.

That is, in a case where the wide portion 2b is not provided, the strength of the bus bar 2 around the through hole 2a is reduced due to the formation of the through hole 2a, but by providing the wide portion 2b, the periphery of the through hole 2a becomes wide and thick causing the strength to improve, and the bus bar 2 can be reinforced. In addition, by providing the wide portion 2b, the inner diameter of the through hole 2a can be increased as compared with the case where the wide portion 2b is not provided, and the contact area with the protrusion portion 6 can also be increased.

In addition, since the resin molded portion 11 seals a portion including the wide portion 2b, the heat from the wide portion 2b can be transmitted to the bus bar temperature sensor 1 via the resin molded portion 11, and the temperature can be measured with higher accuracy.

Furthermore, since the through hole 2a and the protrusion portion 6 both have a circular cross section, it becomes easy to uniformly fill the gap between the through hole 2a and the protrusion portion 6 with the resin over the entire circumference, and it becomes easy to uniformly transmit the heat from the entire circumference to the protrusion portion.

Note that, since the bus bar 2 is used for the motor stator, the temperature of the motor stator can be measured with high accuracy and stability by the protrusion portion 6 of the temperature sensor 1 in which the heat receiving surface is reliably in tight contact.

Hereinafter, second and third embodiments of a bus bar temperature sensor, and a bus bar module and a method of manufacturing the same according to the present invention will be described with reference to Figs. 4A to 6. Note that, in the following description of the embodiments, the same components described in the above embodiment are denoted by the same reference numerals, and the description thereof will be omitted.

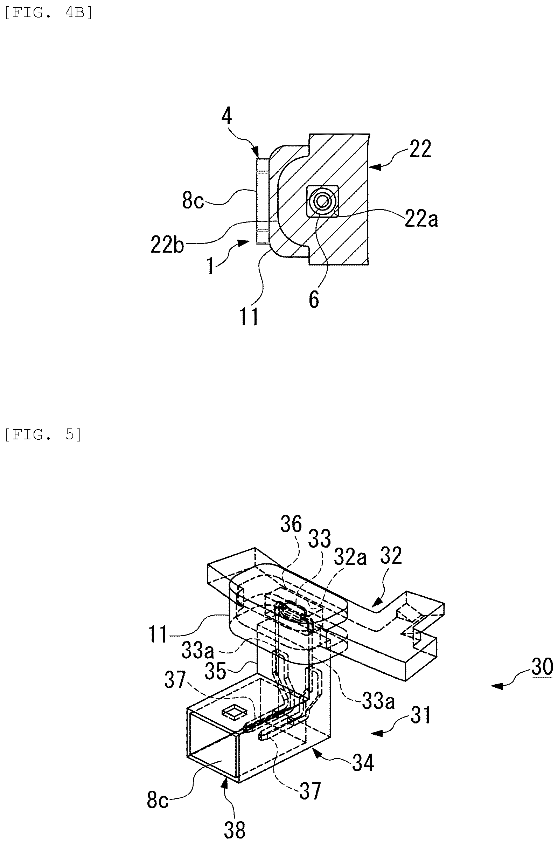

The second embodiment is different from the first embodiment in that the through hole 2a has a circular cross section in the first embodiment, whereas in a bus bar temperature sensor 1 and a bus bar module 20 of the second embodiment, a through hole 22a has a substantially square cross section, as illustrated in Fig. 4B.

In addition, in the second embodiment, a wide portion 22b has a substantially trapezoidal shape corresponding to the through hole 22a having a substantially square cross section.

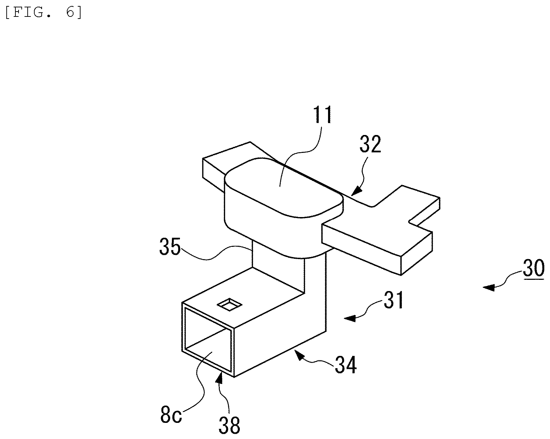

Next, the third embodiment is different from the second embodiment in that a case portion 4 is formed by combining a plurality of members such as a case body 5 (a connector upper portion, a connector lower portion, and the like) and a protrusion portion 6 in the second embodiment, whereas in a bus bar temperature sensor 31 and a bus bar module 30 in the third embodiment, a case portion 34 is manufactured by integral molding with a resin, as illustrated in Figs. 5 and 6.

That is, in the third embodiment, the case portion 34 is manufactured by insert molding in a state where a heat-sensitive element 33, a pair of lead wires 33a, and a pair of electrode terminals 37 are housed.

In addition, the bus bar temperature sensor 31 in the third embodiment includes the pair of electrode terminals 37 which have one ends connected to the other ends of the pair of lead wires 3a and which are housed in the case body 35.

Furthermore, the case body 35 includes a connector portion 38 into which a pair of external wirings is inserted such that the other ends of the pair of electrode terminals 37 can be connected to the pair of external wirings.

In the connector portion 38, distal ends of the pair of external wirings are inserted into an insertion port 8c such that the other ends of the pair of electrode terminals 37 exposed in the connector portion 38 can be connected to the pair of external wirings.

As described above, in the third embodiment, since the case portion 34 is manufactured by integral molding, the number of members can be reduced, and the assembling cost can also be reduced.

In addition, since the case body 35 includes the connector portion 38 into which the pair of external wirings is inserted such that the other ends of the pair of electrode terminals 37 can be connected to the pair of external wirings, the external wirings can be easily connected by the connector portion 38.

In the second embodiment, the heat-sensitive element 3 is vertically long, and the pair of lead wires 3a protrudes from the lower portion of the heat-sensitive element 3. On the other hand, in the third embodiment, the heat-sensitive element 33 is horizontally long, and the pair of lead wires 33a protrudes from both ends of the heat-sensitive element 33.

In addition, in the third embodiment, a through hole 32a and a protrusion portion 36 are both formed in a rectangular cross-sectional shape corresponding to the shape of the heat-sensitive element 33.

### [Examples]

In the bus bar temperature sensors and the bus bar modules of the first and second embodiments, simulation of the thermal time constant of each bus bar temperature sensor when the temperature of each bus bar is instantaneously raised to 150°C, was performed.

Note that, as a conventional example, simulation of a case where a temperature sensor in which a heat-sensitive element is housed in a rectangular resin molded portion has been simply attached to the surface of a bus bar described in Patent Literatures 1 and 2, was similarly performed.

As a result, while the thermal time constant was 18.2 sec in the conventional example described above, the thermal time constant was 6.0 sec in the bus bar temperature sensor and the bus bar module of the second embodiment employing the through hole having a rectangular cross section, and was 4.6 sec in the bus bar temperature sensor and the bus bar module of the first embodiment employing the through hole having a circular cross section.

As described above, in the bus bar temperature sensors and the bus bar modules of the first and second embodiments of the present invention, the thermal time constant is shortened and the speed is greatly increased as compared with the conventional example.

Note that the technical scope of the present invention is not limited to the embodiments and example described above, and various modifications can be made without departing from the gist of the present invention.

For example, although a thermistor is employed in each of the embodiments described above, a chip thermistor, a flake thermistor, a thin film thermistor, or the like can be employed as the thermistor, and a pyroelectric element or the like may be employed. In particular, a heat-sensitive element having an ability of heat resistance at 200°C is preferable.

In addition, as described in each of the embodiments, it is preferable that the bus bar temperature sensor be sealed with the resin molded portion and permanently fixed to the bus bar, but the bus bar temperature sensor may be permanently fixed to the bus bar with an insulating varnish or the like.

### Reference Signs List

1, 31 Bus bar temperature sensor
2 Bus bar
2a, 22a, 32a Through hole
2b Wide portion
3, 33 Heat-sensitive element
3a, 33a Lead wire
4, 34 Case portion
5, 35 Case body
5a End surface of case body on which protrusion portion is formed
6 Protrusion portion
7 Electrode terminal
8, 38 Connector portion
10, 20 Bus bar module
11 Resin molded portion
L External wiring

## Claims

1. A bus bar temperature sensor used by being attached to a bus bar, the bus bar temperature sensor comprising:
a heat-sensitive element; and
a case portion in which the heat-sensitive element is housed, wherein
the bus bar includes a through hole,
the case portion includes a case body and
a protrusion portion formed protruding from the case body and insertable into the through hole, and
the heat-sensitive element is housed in the protrusion portion.

2. The bus bar temperature sensor according to claim 1, wherein
an end surface of the case body on which the protrusion portion is formed comes into contact with or comes close to the bus bar in a state where the protrusion portion is inserted into the through hole.

3. The bus bar temperature sensor according to claim 1, comprising:
a pair of lead wires which have one ends connected to the heat-sensitive element and which are housed in the case body; and
a pair of electrode terminals which have one ends connected to other ends of the pair of lead wires and which are housed in the case body, wherein
the case body includes a connector portion into which a pair of external wirings is inserted such that other ends of the pair of electrode terminals can be connected to the pair of external wirings.

4. A bus bar module comprising:
a bus bar;
the bus bar temperature sensor according to claim 1 attached to the bus bar; and
a resin molded portion which fills in a gap between the through hole and the protrusion portion and seals the through hole and the protrusion portion.

5. The bus bar module according to claim 4, wherein
the bus bar includes a wide portion bulging in a width direction around the through hole, and
the resin molded portion seals a portion including the wide portion.

6. The bus bar module according to claim 4, wherein
the through hole and the protrusion portion both have a circular cross section.

7. The bus bar module according to claim 4, wherein
the bus bar is used for a motor stator.

8. A method of manufacturing the bus bar module according to claim 4, the method comprising:
a protrusion portion inserting step of inserting the protrusion portion of the bus bar temperature sensor according to claim 1 into a through hole formed in a bus bar; and
a resin filling step of forming a resin molded portion which fills a gap between the through hole and the protrusion portion with a resin and seals the through hole and the protrusion portion.
